# FASCICULE DE BREVET EUROPEEN

(11) **EP 3 245 497 B1**
(45) Date de publication et mention de la délivrance du brevet: **03.04.2019**
(21) Numéro de dépôt: 15804867.8
(22) Date de dépôt: 06.11.2015
(51) Int. Cl.: G01N 3/30, G01M 7/08, F42B 5/02, F42B 8/14, F42B 12/36, F42B 12/74, F42B 12/34

(54) **PROJECTILE SOLIDE SANS STRUCTURE DE STABILISATION POUR LES TESTS D'IMPACTS D'OISEAUX CONSTITUÉ D'UN GEL COMPORTANT DU GLYCÉROL**
FESTES VOGELSCHLAGTESTPROJEKTIL AUS GLYZERIN BEINHALTENDEM GLYZERINGEL
SOLID PROJECTILE WITHOUT STABILISING STRUCTURE FOR BIRD IMPACT TESTS CONSISTING OF GLYCERIN GEL COMPRISING GLYCERIN

(30) Priorité: 06.11.2014 FR 1402511
(43) Date de publication de la demande: 22.11.2017
(73) Titulaire: État Français représenté par le Délégué Général pour l'Armement, 75509 Paris Cedex 15 (FR)
(72) Inventeur: BRESSAN, Christian, 31130 Balma (FR); ETCHETO, Henri, 31500 Toulouse (FR); DENAUX, David, 31670 Labège (FR); VIDAL, Georges, 31830 Plaisance du Touch (FR); DIULIUS, Gérard, 31240 Saint-Jean (FR); SARRAZAC, Patrick, 31500 Toulouse (FR); JEAN MARIE, Christian, 31600 Labastidette (FR)
(86) Numéro de dépôt international: PCT/FR2015/000204
(87) Numéro de publication internationale: WO 2016/071587

(56) Documents cités:
- EP-A1- 2 172 734
- WO-A1-2013/109634
- US-A- 5 450 795
- US-A1- 2009 320 710
- US-B2- 8 220 396

## Description

L'invention concerne le domaine de l'investigation des propriétés de résistance d'un matériau solide par application d'une force mécanique et a plus particulièrement pour objet un projectile, comprenant un matériau semblable à un gel et apte à simuler un oiseau de par sa forme et ses propriétés physiques.

Dans le domaine aéronautique, un système normatif important existe du fait de la criticité d'un accident éventuel. Chaque aéronef est obligé de répondre à un ensemble de règles pour être certifié donc autorisé à voler et à transporter des passagers. Cette réglementation est évolutive en fonction des problèmes rencontrés en service et aussi des matériaux utilisés et des méthodes de fabrication. Les méthodes de justification ont aussi évolué même si une large part est encore faite par des essais. Les évolutions ont toujours été faites avec le souci de ne pas dégrader le niveau de sécurité des passagers.

La certification d'un aéronef est une reconnaissance que celui-ci satisfait aux exigences réglementaires de navigabilité. Sa structure doit résister aux charges exceptionnelles rencontrées (résistance statique), mais aussi à l'application de charges répétées (endurance). Pour les exigences, il est demandé la démonstration d'un comportement sûr jusqu'aux limites du domaine spécifié. D'autres parties de la réglementation contiennent des exigences relatives à la résistance aux impacts d'oiseaux. Ainsi les constructeurs doivent démontrer aux autorités de certification que chaque composant sensible d'un appareil, tels que notamment, le cockpit. le pont avant et le bord d'attaque de voilure, susceptibles d'être impactés par un oiseau résiste à un tel impact ou, tout du moins, qu'un tel impact n'altère pas de manière catastrophique la sécurité des vols et le retour au sol de l'aéronef. Les autorités exigent encore que l'essai final soit effectué avec un oiseau réel. Par souci de reproductibilité et d'uniformité ainsi que pour éviter l'utilisation d'oiseaux vivants ou morts, des oiseaux artificiels, aussi appelés impacteurs de substitution ont été développés et sont utilisés comme un substitut aux vrais oiseaux. L'idée d'un impacteur de substitution est étudiée depuis une vingtaine d'années, mais si les constructeurs ont pris l'habitude d'en utiliser dans les phases de conception des pièces, aucun pour le moment n'a émis la volonté de l'utiliser pour les essais de certification. L'émergence du calcul dynamique de ces dernières années devrait donner une seconde vie à l'impacteur de substitution, qui est bien plus facilement modélisable et motiver les constructeurs à l'utiliser pour les essais de développement et de certification, dans la mesure où celui-ci pourrait être validé par les autorités habilitées de l'aviation civile européenne et américaine (spécialement EASA et FAA).

Certains de ces impacteurs sont constitués par un mélange d'eau et de gélatine et sont notamment utilisés pour simuler l'ingestion d'oiseaux par un réacteur. Cependant, ce mélange à base de gélatine doit être assez consistant pour permettre sa manipulation et sa projection dans la cible telle qu'un réacteur ou une hélice d'avion. Ceci peut être obtenu par mélange d'une quantité importante de gélatine avec de l'eau chaude, puis en laissant le mélange reposer de sorte que le gel résultant soit suffisamment rigide, solide et stable pour lui permettre d'être tiré à une vitesse représentative de conditions spécifiques d'impacts réels d'oiseaux sur des aéronefs en vol.

Toutefois, un inconvénient est que le gel a tendance à avoir une consistance caoutchouteuse, qui ne reproduit pas complètement le comportement réel d'un oiseau. Le niveau élevé de l'élasticité peut provoquer le rebond ou un écrasement atypique de l'impacteur lors de l'impact alors qu'un véritable oiseau ne le ferait pas.

Par ailleurs, les projectiles sont tirés dans les zones des éléments à tester à une vitesse élevée, par exemple à l'aide d'un canon à gaz tel que l'air comprimé, En raison des grandes vitesses et de la résistance élevée à l'air qui en résulte au cours de la phase de vol du projectile, l'impacteur se déforme ce qui nuit à la qualité de la simulation d'un oiseau réel et à la qualité des essais, ne serait-ce que par les modifications engendrées à la trajectoire et/ou à la vitesse du projectile notamment pour ce qui est de la mesure à acquérir de cette dernière.

Pour éviter ces inconvénients, on connaît, d'une pad. le brevet US 8,220,396 qui décrit un projectile comportant une structure de stabilisation, par exemple en carton et en forme de nid d'abeille entourée par du gel formé par exemple d'eau et de gélatine ou par un composé analogue à une gelée tel par exemple un caoutchouc, du silicone, de la glycérine du savon, de l'amidon, de gel de polymère, du caoutchouc, du latex et / ou de la pâte à modeler.

Cette structure de stabilisation présente d'une part une rigidité élevée pour éviter les déformations du projectile en vol et, d'autre part, est très fragile de sorte qu'elle est quasiment immédiatement détruite lors de l'impact avec la cible et n'a donc, d'après l'auteur, quasiment aucune influence sur le comportement du projectile lors de l'impact.

On connaît d'autre part la demande de brevet US2010/0077832 qui décrit un projectile comportant une mousse solide et un gel. La phase de mousse est généralement une mousse polymère telle par exemple une mousse de résine phénolique, de polyuréthane, de polyester éponge ou de résine urée-formaldéhyde.

Cette mousse peut avoir une structure ouverte pour permettre au gel, lors de sa préparation, d 'être aspiré, par capillarité dans les pores de la mousse. la porosité de cette dernière étant préférablement supérieure à 80%. Il est indiqué que cette mousse peut simuler le squelette d'un oiseau.

Le gel est de préférence un gel aqueux. L'agent gélifiant peut être choisi dans la liste suivante: la gélatine, l'agar, le carraghénane, la pectine, le konnyaku, la gomme de caroube. les alginates, la gomme gellane, de l'hypromellose, hydroxypropyl méthyl cellulose, la gomme xanthane et l'amidon. De préférence, l'agent gélifiant est de la gélatine. Il peut être absorbé entièrement ou non à l'intérieur de la mousse.

Les projectiles selon ces brevets présentent une bonne conservation de leurs dimensions en vol mais ajoutent des éléments supplémentaires qui complexifient la fabrication du projectile et, quoi qu'en disent leurs auteurs, ajoutent des éléments qui altèrent la qualité des essais et surtout leur ressemblance avec un oiseau vivant.

Le but de l'invention est de résoudre les inconvénients précités en proposant un projectile apte à simuler parfaitement l'impact d'un oiseau vivant ou mort sur une structure, facile à fabriquer et ne présentant quasiment pas de déformations en vol.

La solution apportée est un projectile solide sans structure de stabilisation pour les tests d'impacts d'oiseaux tel que revendiqué dans la revendication indépendante 1.

L'utilisation de glycérol permet d'améliorer la conservation du projectile mais surtout accroît considérablement la stabilité dimensionnelle du projectile mais en cas de vol à vitesse élevée, typiquement supérieure à 150m/s.

Le projectile selon l'invention comporte plus de 20% de glycérol et préférablement, entre 30 et 40% de glycérol.

Le projectile selon l'invention comporte un agent gélifiant, par exemple de l'agar-agar, du glycérol, des microballons et de l'eau. Les microballons ont une taille inférieure à 200µm et peuvent par exemple être en en résine phénolique.

La présence de micro-ballons favorise le déchirement du projectile lors de l'impact et améliore la qualité de la simulation du comportement d'un oiseau réel.

Afin d'accroître encore la qualité de la simulation du comportement d'un oiseau réel un projectile selon l'invention comporte :
- 2 à 8% d'un agent gélifiant et préférablement 5%
- 30 à 40% de glycérol et préférablement 35%
- 1 à 5% de microballons et préférablement 3,2%
- au moins 47% d'eau et préférablement 56.8%.

Selon une autre caractéristique, l'agent gélifiant est choisi dans la liste suivante: la gélatine, l'agar, le carraghénane, la pectine, le konnyaku, la gomme de caroube, les alginates, la gomme gellane, de l'hypromellose, de hydroxypropyl méthyl cellulose, la gomme xanthane et l'amidon.

Un tel projectile artificiel est très homogène ce qui facile sa modélisation et permet de réaliser n'importe qu'elle forme et a un comportement plus reproductible que celui d'oiseaux vivants ou morts et aussi proche que possible du comportement moyen de ceux-ci, tout en étant conservatif.

Selon une autre caractéristique, un projectile selon l'invention a une forme hémisphérique de part et d'autre d'une partie centrale cylindrique.

Selon une caractéristique additionnelle, la partie centrale à un diamètre compris entre 90 et 130mm pour une hauteur comprise entre 60 et 100mm et, préférablement, une partie centrale de hauteur égale à 70,1mm et un diamètre égal à 95mm ou une partie centrale de hauteur égale à 88,3mm et un diamètre égal à 119,7 mm.

Selon une autre caractéristique, le projectile a une masse volumique comprise entre 950 et 970 kg/ms.

Selon une caractéristique particulière, un projectile selon l'invention comporte une partie centrale de hauteur égale à 70,1 mm et un diamètre égal à 95mm pour une masse d'environ 908 grammes.

D'autres avantages et caractéristiques apparaîtront dans la description de plusieurs modes de réalisation de l'invention au regard des figures annexées parmi lesquelles :
- La figure 1 présente un exemple de forme de projectile solide sans structure de stabilisation selon l'invention,
- La figure 2 montre le type de pressions mesurées sur une plaque en fonction du temps, la courbe n°1 concernant le poulet et la courbe n°2 l'impacteur (AM) selon l'invention.
- La figure 3 montre un exemple de vue au microscope des microballons au sein d'un projectile selon l'Invention.

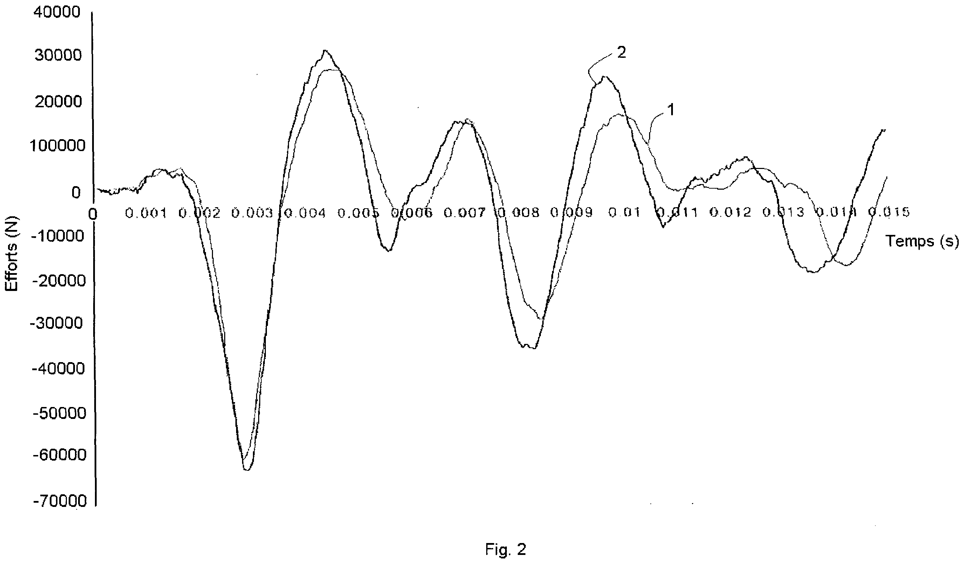

- La figure 2 présente un tableau regroupant des calculs de :
   * La moyenne des coefficients de corrélation obtenus sur les différents capteurs,
   * La moyenne des rapports d'amplitude obtenus sur les différents capteurs,
   * Du rapport des énergies cinétiques du poulet et de l'impacteur (AM),
   calculs effectués à partir de mesures de pression et de déformation de ladite plaque.

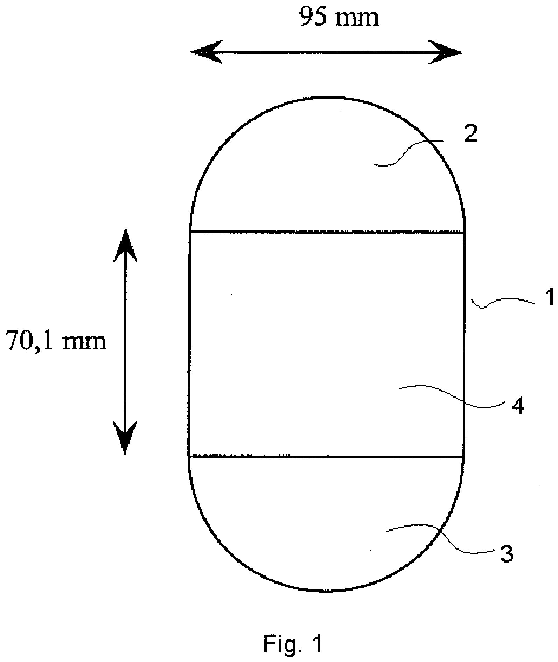

La figure 1 présente un exemple de forme de projectile 1 solide sans structure de stabilisation selon l'invention. Il a une partie centrale 4 de forme cylindrique comportant une partie sensiblement hémisphérique 2, 3 à chacune de ses extrémités. La hauteur de la partie centrale 4 est d'environ 70,1mm et son diamètre égal à environ 95mm présentant ainsi une longueur maximale d'environ 165,1mm pour une masse d'environ 908g.

Ce projectile est composé de :
- 5% d'agent gélifiant, en l'occurrence de l'agar-agar à solubilité rapide,
- 35% de glycérol,
- 3,2% de microballons,
- 56.8% d'eau.

Sa préparation a été la suivante 1 :
1. Chauffage de l'eau à une température comprise entre 80-85'C,
2. Mélange de l'agent gélifiant, à savoir l'agar-agar, dans le glycérol pour obtenir une liaison,
3. Mélange des micro-ballons à la liaison,
4. Ajout de l'eau chaude doucement sous agitation pendant plusieurs minutes, par exemple 5 minutes,
5. laisser refroidir le mélange obtenu jusqu'à une température comprise entre 50 et 54) degrés puis versement du mélange obtenu dans un moule ayant la forme du projectile,
6. laisser refroidir à température ambiante.

Après refroidissement complet, le projectile obtenu est démoulé puis stocké, par exemple sous film plastique, à une température préférablement comprise entre 5 et 10'C.

Des essais comparatifs entre les conséquences d'un impact de poulet et celui d'un impacteur (AM) selon l'invention ont été réalisés avec une éprouvette constituée par une plaque en kevlar sur la face arrière se laquelle ont été disposés des capteurs de pression FX, FY, FZ et des jauges de déformation.

Comme le montre le tableau 1, des premiers essais 2 et 17 ont consisté à caractériser les conséquences d'un impact d'un poulet de 925g et d'un impacteur selon l'invention de 900g lancés contre la face avant de ladite plaque avec un angle de 45° à une vitesse de 117m/s, respectivement de 123m/s, et des seconds essais 2bis et 17bis qui ont consisté à caractériser les conséquences d'un impact d'un poulet de 905g et d'un impacteur selon l'invention de 900g lancés contre la face avant de ladite plaque avec un angle de 45° à une vitesse de 165m/s respectivement de 167m/s.

**Tableau I**

| Cible | Angle | Projectile | N° Plaque | N°tir | Vitesse (m/s) | Masse (g) | Energie (J) |
|---|---|---|---|---|---|---|---|
| Kevlar | 45 | Substitution | 678 | 2 | 123 | 900 | 6808 |
| | | Poulet | 679 | 17 | 117 | 925 | 6331 |
| | | Substitution | 678 | 2bis | 167 | 900 | 12550 |
| | | Poulet | 679 | 17bis | 165 | 905 | 12319 |

Les pressions exercées sur ladite plaque mesurées en fonction du temps sont du type de celles présentées en figure 2, la courbe n°1 concernant le poulet et la courbe n°2 l'impacteur (AM) selon l'invention. On constate un décalage des pics de pression qui s'accentue avec le temps.

Aussi, la comparaison de la forme générale des deux courbes s'effectue en calculant, en fonction du temps, le coefficient de corrélation des deux courbes entre l'instant initial et l'instant t. Ce coefficient est compris entre -1 et 1; il vaut 1 lorsque ces courbes varient exactement en phase et -1 si elles sont en opposition de phase. Par ailleurs pour quantifier la similitude de l'importance des déformations appliquées, il faut calculer le rapport d'amplitude c'est-à-dire le rapport des valeurs efficaces des signaux.
A partir de ces résultats ont été calculés :
- La moyenne des coefficients de corrélation obtenus sur les différents capteurs,
- La moyenne des rapports d'amplitude obtenus sur les différents capteurs
- Le rapport des énergies cinétiques du poulet et de l'impacteur (AM)
Le tableau 2 donne les résultats des calculs mentionnés ci-dessus.

**Tableau 2**

| Paramètres essais | | | | Moyenne des corrélations | | | | Energie | Moyenne des rapports d'amplitude | | | |
|---|---|---|---|---|---|---|---|---|---|---|---|---|
| Poulet | AM | Angle | Vitesse (m/s) | FX | FY | FZ | Jauges | Ecart Poulet/ AM | FX | FY | FZ | Jauges |
| 17 | 2 | 45° | 120 | 91% | 89% | 96% | 96% | 92% | 84% | 87% | 89% | 96% |
| 17bis | 2bis | 45° | 166 | 91% | 94% | 99% | 95% | 98% | 63% | 84% | 100% | 98% |

Les valeurs des moyennes des corrélations de 95% sont très élevées ce qui montre que le profil temporel des signaux relatifs au poulet et de ceux relatifs à l'impacteur sont proches tandis que le rapport d'amplitude, lui, est du même ordre que le rapport des énergies incidentes, ce qui signifie qu'à énergie égale, l'impacteur applique des déformations équivalentes à celles d'un poulet.

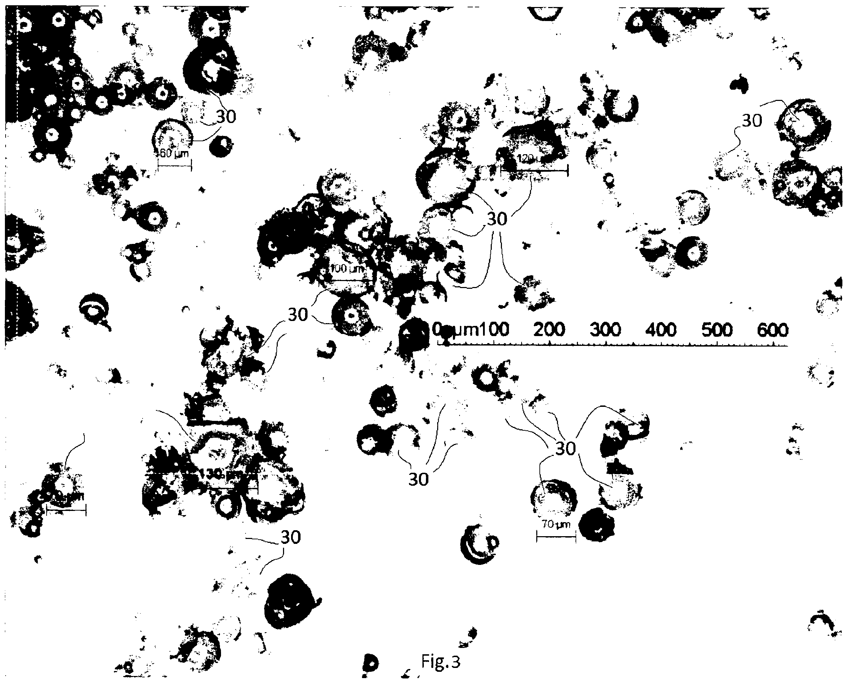

La figure 3 montre un exemple de vue au microscope des microballons au sein d'un projectile selon l'invention. Dans cet exemple de réalisation, les microballons sont en résine phénolique et ont un diamètre inférieur 200µm. Sur cette photo, la taille des microballons présents est comprise entre 10 et 130µm.

## Revendications

1. Projectile (1) solide sans structure de stabilisation pour les tests d'impacts d'oiseaux **caractérisé en ce qu'**il comporte plus de 20% de glycérol et préférablement, entre 30 et 40% de glycérol, le projectile (1) comprenant également un agent gélifiant, par exemple de l'agar-agar, du glycérol, des microballons et de l'eau, les microballons ayant une taille inférieure à 200pm, le projectile comportant :
- 2 à 8% d'un agent gélifiant et préférablement 5%,
- 30 à 40% de glycérol et préférablement 35%,
- 1 à 5% de microballons et préférablement 3,2%,
- au moins 47% d'eau et préférablement 56,8%.

2. Projectile selon la revendication 1, **caractérisé en ce que** les microballons sont fabriqués en résine phénolique.

3. Projectile selon l'une quelconque des revendications 1 à 2, **caractérisé en ce que** l'agent gélifiant est choisi dans la liste suivante: la gélatine, l'agar, le carraghénane, la pectine, le konnyaku, la gomme de caroube, les alginates, la gomme gellane, de l'hypromellose, de l'hydroxypropyl méthyl cellulose, la gomme xanthane et l'amidon.

4. Projectile selon l'une quelconque des revendications 1 à 3, **caractérisé en ce qu'**il a une forme hémisphérique de part et d'autre d'une partie centrale cylindrique.

5. Projectile selon la revendication 4, **caractérisé en ce que** la partie centrale à un diamètre compris entre 90 et 130mm pour une hauteur comprise entre 60 et 100mm et, préférablement, une partie centrale de hauteur égale à 70,1 mm et un diamètre égal à 95mm ou une partie centrale de hauteur égale à 88,3mm et un diamètre égal à 119,7 mm.

6. Projectile selon l'une quelconque des revendications 1 à 5, **caractérisé en ce qu'**il a une masse volumique comprise entre 950 et 970 kg/m3

7. Procédé de fabrication d'un projectile selon l'une quelconque des revendications 1 à 6, **caractérisé en ce qu'**il comporte les étapes successives suivantes :
- Mélange de l'agent gélifiant dans le glycérol pour obtenir une liaison,
- Mélange des microballons à la liaison, - Ajout de l'eau chaude sous agitation pendant plusieurs minutes, cette eau ayant été préalablement chauffée à une température comprise entre 80 et 85°C,
- Versement du mélange obtenu dans un moule ayant la forme voulue du projectile.

8. Procédé selon la revendication 7, **caractérisé en ce que** l'étape de versement du mélange obtenu dans un moule ayant la forme voulue est effectuée lorsque la température du mélange est comprise entre 50 et 54°C.

## Patentansprüche

1. Festes Geschoss (1) ohne Stabilisierungsstruktur für Vogelschlagprüfungen, **dadurch gekennzeichnet, dass** es über 20 % Glycerin und vorzugsweise zwischen 30 und 40 % Glycerin aufweist, wobei das Geschoss (1) ebenfalls ein Geliermittel, beispielsweise Agar-Agar, Glycerin, Mikroballone und Wasser umfasst, wobei die Mikroballone eine Größe unter 200 pm haben, wobei das Geschoss aufweist:
- 2 bis 8 % eines Geliermittels und vorzugsweise 5 %,
- 30 bis 40 % Glycerin und vorzugsweise 35 %,
- 1 bis 5 % Mikroballone und vorzugsweise 3,2 %,
- mindestens 47 % Wasser und vorzugsweise 56,8 %.

2. Geschoss nach Anspruch 1, **dadurch gekennzeichnet, dass** die Mikroballone aus Phenolharz hergestellt sind.

3. Geschoss nach einem der Ansprüche 1 bis 2, **dadurch gekennzeichnet, dass** das Geliermittel aus der folgenden Liste ausgewählt ist: der Gelatine, dem Agar, dem Carrageeen, dem Pektin, der Teufelszunge, dem Johannisbrotkernmehl, den Alginaten, dem Gellan, der Hypromellose, der Hydroxypropylmethylcellulose, dem Xanthan und der Stärke.

4. Geschoss nach einem der Ansprüche 1 bis 3, **dadurch gekennzeichnet, dass** es eine halbkugelige Form beiderseits eines zylindrischen zentralen Teils hat.

5. Geschoss nach Anspruch 4, **dadurch gekennzeichnet, dass** der zentrale Teil einen Durchmesser zwischen 90 und 130 mm bei einer Höhe zwischen 60 und 100 mm und vorzugsweise einen zentralen Teil mit einer Höhe von gleich 70,1 mm und einem Durchmesser von gleich 95 mm oder einen zentralen Teil mit einer Höhe von gleich 88,3 mm und einem Durchmesser von gleich 119,7 mm hat.

6. Geschoss nach einem der Ansprüche 1 bis 5, **dadurch gekennzeichnet, dass** es eine Volumenmasse zwischen 950 und 970 kg/m³ hat.

7. Verfahren zur Herstellung eines Geschosses nach einem der Ansprüche 1 bis 6, **dadurch gekennzeichnet, dass** es die folgenden aufeinanderfolgenden Schritte aufweist:
- Mischen des Geliermittels in Glycerin, um eine Verbindung zu erhalten,
- Mischen der Mikroballone mit der Verbindung,
- Hinzufügen von warmem Wasser unter Rühren während mehrerer Minuten, wobei dieses Wasser zuvor auf eine Temperatur zwischen 80 und 85 °C erwärmt wurde,
- Gießen des erhaltenen Gemischs in eine Form, die die gewollte Form des Projektils hat.

8. Verfahren nach Anspruch 7, **dadurch gekennzeichnet, dass** der Schritt des Gießens des erhaltenen Gemischs in eine Form, die die gewollte Form des Projektils hat, durchgeführt wird, wenn die Temperatur des Gemischs zwischen 50 und 54 °C beträgt.

## Claims

1. A solid projectile (1) without stabilising structure for bird strike tests, **characterised in that** it comprises more than 20% of glycerol, and preferably between 30% and 40% of glycerol, the projectile (1) also comprising a gelling agent, for example agar, glycerol, microbeads and water, the microbeads having a size lower than 200pm, the projectile comprising:
- 2% to 8% of a gelling agent, and preferably 5%,
- 30% to 40% of glycerol, and preferably 35%,
- 1% to 5% of microbeads, and preferably 3.2%,
- at least 47% of water, and preferably 56.8%.

2. The projectile according to claim 1, **characterised in that** the microbeads are made of phenolic resin.

3. The projectile according to any of claims 1 to 2, **characterised in that** the gelling agent is selected from the following list: gelatin, agar, carrageenan, pectin, konnyaku, carob gum, alginates, gellan gum, hypromellose, hydroxypropylmethyl cellulose, xantham gum and starch.

4. The projectile according to any of claims 1 to 3, **characterised in that** it has a hemispherical shape on either side of a cylindrical central portion.

5. The projectile according to claim 4, **characterised in that** the central portion has a diameter between 90mm and 130mm for a height between 60mm and 100mm and, preferably, a central portion with a height of 70.1mm and a diameter of 95mm or a central portion with a height of 88.3mm and a diameter of 119.7mm.

6. The projectile according to any of claims 1 to 5, **characterised in that** it has a density between 950 kg/m³ and 970kg/m³.

7. A method for manufacturing a projectile according to any of claims 1 to 6, **characterised in that** it comprises the following successive steps:
- mixing the gelling agent in the glycerol for providing a binding,
- mixing the microbeads with the binding,
- adding hot water under stirring for several minutes, this water having been previously heated at a temperature between 80°C and 85°C,
- pouring the resulting mixture into a mold having the desired shape of the projectile.

8. The method according to claim 7, **characterised in that** the step of pouring the resulting mixture into a mold having the desired shape is performed when the temperature of the mixture is between 50°C and 54°C.
